# FASCICULE DE BREVET EUROPEEN

(11) **EP 1 308 264 B1**
(45) Date de publication et mention de la délivrance du brevet: **29.03.2006**
(21) Numéro de dépôt: 02362016.4
(22) Date de dépôt: 11.10.2002
(51) Int. Cl.: B29C 70/08, B29C 70/46

(54) **Procédé de fabrication de tuyauteries composites notamment de conditionnement d'air et tuyauteries ainsi obtenues**
Verfahren zur Herstellung von Rohren aus Verbundwerkstoff, insbesondere für Klimaanlagen und mit diesem Verfahren hergestellte Rohre
Method for manufacturing piping from composite material, in particular for airconditioning and piping obtained thereby

(30) Priorité: 31.10.2001 FR 0114147
(43) Date de publication de la demande: 07.05.2003
(73) Titulaire: AIRBUS France, 31060 Toulouse Cedex (FR)
(72) Inventeur: Eftymiades, Georges, 31820 Pibrac (FR); Lazorthes, Benjamin, 31000 Toulouse (FR)
(74) Mandataire: Thébault, Jean-Louis

(56) Documents cités:
- US-A- 4 005 234

## Description

La présente invention se rapporte à la fabrication de tuyauteries en matériau composite notamment destinées aux réseaux de conditionnement d'air installés à bord d'aéronefs.

A bord d'un aéronef, les tuyauteries de conditionnement d'air utilisent un air recyclé. Cet air est refroidi par des échangeurs de chaleur à des températures d'utilisation comprises entre 20°C et 30°C. En cas de défaillance de ces échangeurs de chaleur, les tuyauteries sont dimensionnées pour résister à des températures de l'ordre de 70°C.

De plus, en présence de feu, lesdites tuyauteries doivent être autoextinguibles et ne pas dégager de fumée ni de gaz toxiques à l'inhalation, afin de préserver la vie des passagers et des membres d'équipage.

Enfin, ces tuyauteries doivent être étanches, car toute fuite d'air entraînerait un prélèvement d'air supplémentaire, augmentant ainsi la consommation en carburant.

Actuellement, ces tuyauteries se composent de deux plis de tissus de verre imprégnés de résine phénolique. La masse surfacique d'un pli est environ 300g/m², ledit pli étant imprégné à 40 % de résine, ce qui porte la masse surfacique du pli à 420g/m². L'utilisation de deux plis superposés constituant ainsi un ensemble d'une masse surfacique de 840g/m², permet de garantir la résistance structurale du produit final.

Ces deux plis sont drapés dans ou sur un moule métallique ou composite ayant la forme finale de la tuyauterie. Deux technologies sont habituellement utilisées pour ce qui concerne le moule qui peut être, soit constitué de deux parties assemblables définissant une empreinte en creux ayant la forme de la pièce à réaliser, sur laquelle sont disposés les plis, une vessie gonflable étant ensuite installée sur les plis, puis gonflée pour les plaquer sur le moule comme décrit dans US-A-4005234 et le préambule de la revendication 1, soit constitué d'un poinçon à la forme de la pièce à réaliser, sur lequel sont drapés lesdits plis, le vide étant ensuite fait entre les plis et un film étanche recouvrant ces derniers.

Lorsque les plis sont en pression dans ou sur le moule, l'ensemble est installé dans une étuve ou un autoclave pour, soit élever la température uniquement, soit élever la température et la pression, à des fins de polymérisation.

Une fois cette première polymérisation terminée, et la tuyauterie ainsi fabriquée revenue à température ambiante, un vernis à base de résine phénolique est appliqué à l'aide d'un pistolet de peinture ou d'un simple pinceau sur toute la partie extérieure de ladite tuyauterie, afin d'obturer les porosités pouvant exister suite à la polymérisation.

La mise en oeuvre dudit vernis pose des contraintes en matière d'hygiène et de sécurité, du fait de la présence du solvant contenu dans la résine phénolique. Une deuxième polymérisation en étuve est alors effectuée afin de polymériser cette couche de vernis. Des tests d'étanchéité (pression/dépression) sont ensuite réalisés en vue de vérifier l'étanchéité de la tuyauterie.

Dans le cas où l'étanchéité serait défectueuse, une seconde couche de vernis est alors appliquée sur la tuyauterie qui est alors replacée en étuve afin d'être polymérisée une nouvelle fois. De nouveaux tests sont effectués sur ladite tuyauterie afin de contrôler son étanchéité. Si l'étanchéité est à nouveau défectueuse, la tuyauterie subira un nouveau cycle de vernis / polymérisation tests. Toutes les tuyauteries ainsi fabriquées sont testées afin de vérifier leur niveau d'étanchéité.

Ainsi, ce procédé de réalisation de tuyauterie est contraignant et occasionne un cycle de réalisation important en rapport du temps technologique de fabrication de ladite tuyauterie. II n'est pas en adéquation avec les objectifs industriels que sont les réductions des cycles et des coûts. Non seulement ce procédé ralentit le cycle de fabrication de la tuyauterie, mais encore, il utilise des produits dont la mise en oeuvre pose des contraintes en matière d'hygiène et de sécurité. De plus, la tuyauterie ainsi réalisée ne s'inscrit pas dans les objectifs de gain de masse et de prix du fait qu'on utilise deux plis de tissus pré-imprégnés auxquels se rajoutent les différentes couches de vernis.

Le but de l'invention est précisément de remédier à ces inconvénients en proposant un processus de fabrication à la fois simplifié, facile à mettre en oeuvre et économe en temps.

A cet effet, l'invention a pour objet un procédé de fabrication de tuyauteries composites comme défini dans la revendication 1.

Le revêtement à base d'agent d'étanchéité est mis en place sur la face du pli unique devant constituer la paroi interne de la tuyauterie.

Suivant un premier mode de mise en oeuvre du procédé, après mise en place sur l'une des faces dudit pli unique pré-imprégné, dudit revêtement d'agent d'étanchéité, on met en place dans ou sur le moule l'ensemble pli-revêtement, on presse par pression ou dépression ledit ensemble contre le moule et on effectue ladite polymérisation sous pression et température appropriées.

Suivant un second mode de mise en oeuvre, on met en place par drapage dans ou sur le moule ledit pli unique pré-imprégné, puis on met en place sur ledit pli drapé le revêtement d'agent d'étanchéité, ensuite on presse par pression ou dépression l'ensemble pli-revêtement contre le moule et on effectue ladite polymérisation sous pression et température appropriées.

Dans l'un et l'autre de ces modes de mise en oeuvre, le moule peut être constitué selon l'une des deux technologies rappelés plus haut et placé en étuve ou en autoclave pour réaliser ladite polymérisation.

Un tel procédé permet de fabriquer des tuyauteries ayant des caractéristiques structurales comparables à celles des tuyauteries fabriquées selon la technique conventionnelle et présentant de bonnes caractéristiques d'étanchéité dès la fin de la polymérisation, laquelle n'a pas à être répétée.

Par ailleurs, l'utilisation d'un pli unique permet de réaliser un gain substantiel au niveau du prix de la structure tissée ou non-tissée et de sa mise en oeuvre qui est beaucoup plus rapide, la tuyauterie ainsi obtenue ayant des caractéristiques structurales comparables à celles fabriquées selon la technique évoquée plus haut.

D'autres caractéristiques et avantages ressortiront de la description qui va suivre de modes de mise en oeuvre du procédé de l'invention, description donnée à titre d'exemple uniquement et en regard des dessins annexés sur lesquels :
- la figure 1 illustre schématiquement les premières étapes d'un premier mode de mise en oeuvre du procédé de l'invention et
- les figures 2a et 2b illustrent un second mode de mise en oeuvre.

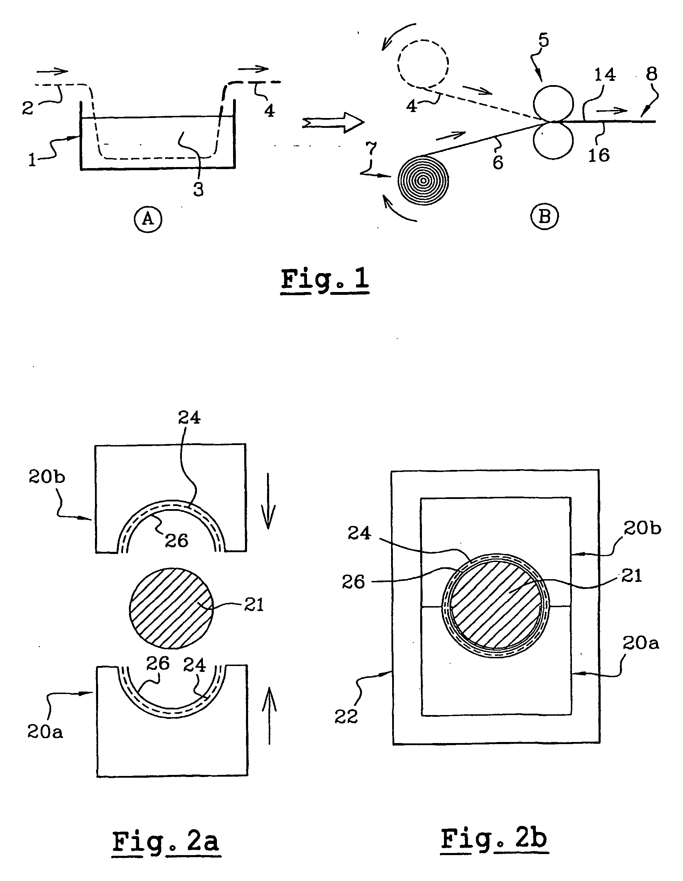

Sur la figure 1, on a représenté les deux premières étapes A et B de mise en oeuvre du procédé de l'invention.

Lors de la première étape A, on procède à l'imprégnation dans un bac 1 d'une structure de fibres par exemple un tissu de verre sec 2 à l'aide d'une résine 3 appropriée contenue dans le bac 1. Dans le domaine aéronautique, le tissu de verre est en effet particulièrement apprécié pour ses qualités de résistance structurale et son faible niveau de prix. D'autres types de tissu, par exemple de fibres aramides, notamment le Keviar, ou de matériau non tissé, peuvent bien entendu être utilisés.

Le tissu 2 se présente, conformément à l'invention, sous la forme d'un pli unique présentant une masse surfacique d'au moins 400g/m² environ.

La résine d'imprégnation 3 est par exemple une résine phénolique, époxy ou polyimide et l'imprégnation se fait au défilé suivant un taux d'imprégnation d'au moins 40 %, le tissu imprégné désigné par la référence numérique 4 étant directement utilisable pour la réalisation des tuyauteries envisagées.

Au préalable, c'est-à-dire avant mise en forme dans un moule (non représenté sur la figure 1), le tissu imprégné 4 subit l'étape B au cours de laquelle le tissu imprégné 4, préalablement bobiné, est déroulé pour passer entre deux rouleaux presseurs 5 pour être plaqué contre un film fin 6 déroulé d'une bobine 7 et constitué d'un agent d'étanchéité, autoextinguible.

Les deux rouleaux presseurs 5 compressent à une pression adéquate les deux bandes superposées 4 et 6 en une seule bande de tissu 8 comprenant à la fois le tissu pré-imprégné 4 et le film 6.

Cette bande de tissu 8 peut facilement par exemple être drapée sur un moule ayant la forme de la pièce à fabriquer.

De préférence, le côté 14 de la bande 8 sur lequel se trouve le tissu pré-imprégné 4 et qui présente un caractère adhésif dû à la présence de la résine phénolique, époxy ou polyimide, sera placé contre la paroi du moule en sorte d'obtenir une bonne adhérence au moule.

Le moule est constitué suivant l'une des deux technologies décrites dans le préambule, l'ensemble formé soit des deux parties de moule avec la vessie interne soit d'un poinçon, étant installé dans une étuve ou un autoclave pour soit élever la température uniquement, soit pour élever la température et la pression afin de polymériser la résine du tissu pré-imprégné.

Lors de la polymérisation, le film 6 adhère naturellement au tissu 4 créant ainsi une barrière étanche sur la face interne de la tuyauterie puisque le tissu pré-imprégné 4 est pressé contre le moule.

L'agent d'étanchéité se trouvant à l'intérieur de la tuyauterie est ainsi à l'abri des chocs, des éraflures ou des frottements pouvant dégrader les caractéristiques d'étanchéité de la tuyauterie.

La présence de ce film 6 améliore l'état de surface à l'intérieur de la tuyauterie ce qui améliore par voie de conséquence l'écoulement du fluide dans ladite tuyauterie. De plus, dans le cas d'un moule en deux parties avec une vessie interne, le démoulage est facilité du fait de l'absence de contacts entre le tissu pré-imprégné 4 et les éléments en silicone de la vessie comprimant ledit tissu 4 contre le moule.

Il est à noter qu'un seul pli de tissu pré-imprégné 4 est utilisé pour fabriquer la tuyauterie alors qu'auparavant deux plis étaient nécessaires, ce qui divise par deux l'opération de drapage. Même si l'utilisation d'une plus grande quantité de résine d'imprégnation alourdit ce pli unique, dont la masse surfacique est supérieure à 400g/m², la tuyauterie ainsi réalisée présente néanmoins une masse finale inférieure à la masse cumulée des deux plis de la technique antérieure. L'utilisation d'un seul pli permet également de réaliser un gain substantiel au niveau du prix du tissu pré-imprégné et de sa mise en oeuvre.

Bien que l'utilisation d'un agent d'étanchéité ne permette pas de s'affranchir des tests de vérification d'étanchéité appliqués aux tuyauteries, ces tests ont néanmoins démontré que la tuyauterie obtenue selon le procédé de l'invention possède de bonnes caractéristiques d'étanchéité dès la première polymérisation. Ainsi, il s'est avéré que le nombre de tuyauteries réalisées conformément à l'invention qui ont été aux essais reconnues défectueuses, et, qui ont dû être traitées par un vernis supplémentaire appliqué au moyen d'un pinceau, ne représente plus qu'un pourcentage faible, inférieur à 10 %, de la totalité des tuyauteries fabriquées. De plus, dans le cas d'un défaut d'étanchéité, les bonnes caractéristiques d'étanchéité de la tuyauterie réalisée selon le procédé de l'invention ne nécessitent, pour obtenir l'étanchéité voulue, qu'une seule application dudit vernis, ce qui contribue aussi à diminuer les cycles de fabrication.

Avantageusement, ledit agent d'étanchéité se présente sous la forme d'un film fin, autoextinguible, intégré audit pli de tissu composite pré-imprégné avant la phase de fabrication des tuyauteries.

Au lieu d'un film fin, ledit agent d'étanchéité peut se présenter sous la forme d'une pâte, notamment d'un gel-coat de type mélamine autoextinguible, déposée sur ledit tissu pré-imprégné 4, avant la phase de fabrication des tuyauteries.

La pâte peut être étalée au pinceau sur l'une des faces du tissu 4.

L'agent d'étanchéité peut être intégré à l'armature tissée ou non-tissée et pré-imprégnée, pendant la phase de fabrication de la tuyauterie et non plus avant comme on vient de le décrire.

Une telle variante de réalisation est illustrée par les figures 2a et 2b dans le cadre de la réalisation d'une tuyauterie cylindrique à l'aide d'un moule en deux parties respectivement 20a et 20b présentant chacune une empreinte en creux semi-cylindrique sur laquelle est drapé un pli unique de tissu 24 pré-imprégné.

Comme dans l'exemple précédent, le pli unique est constitué d'une structure tissée ou non-tissée de fibres sèches, de masse surfacique d'au moins 400g/m², pré-imprégnée d'une résine appropriée, par exemple de type phénolique, époxy ou polyimide.

L'agent d'étanchéité, par exemple un film mince 26, est ensuite drapé par-dessus ledit, pli unique 24. Dans le cas où ledit agent d'étanchéité est une pâte telle que définie plus haut, celle-ci est appliquée sur les plis 24 lorsque ces derniers sont en place dans le moule (20a, 20b).

Une vessie gonflable 21 est mise en place dans le moule avant rapprochement et fermeture des deux parties 20a, 20b et l'ensemble (figure 2b) est installé dans une étuve ou un autoclave 22 afin d'élever soit la température uniquement, la pression étant assurée par la seule vessie, soit la température et la pression, pour effectuer la polymérisation.

Après démoulage de la tuyauterie, on réalise enfin les tests d'étanchéité par mise en pression, puis dépression, de la tuyauterie. Comme dans le cas précédent, si un défaut d'étanchéité est détecté, une couche de vernis, et une seule, sera alors passée au pinceau sur la pièce défectueuse pour restaurer l'étanchéité totale de la tuyauterie. Une seconde et dernière polymérisation sera alors effectuée.

Enfin, l'invention n'est évidemment pas limitée aux modes de mise en oeuvre illustrés et décrits ci-dessus, mais en couvre au contraire toutes les variantes, notamment en ce qui concerne la nature de l'agent d'étanchéité et ses modalités de mise en place, ainsi que la nature des fibres du tissu et de la résine d'imprégnation.

## Revendications

1. Procédé de fabrication de tuyauteries composites, notamment de conditionnement d'air, à partir d'une structure de fibres minérales ou organiques, naturelles ou artificielles, dans lequel on imprègne d'une résine appropriée ladite structure de fibres et après mise en forme dans ou sur un moule, on élève la température et éventuellement la pression à des fins de polymérisation de la dite résine, une étanchéification de la paroi de la pièce en forme étant effectuée au cours de ce procédé, **caractérisé en ce que** :
- on met en oeuvre une structure de fibres constituée d'un unique pli (2, 24) d'une masse surfacique d'au moins 400g/m² environ,
- on imprègne ledit pli unique (2, 24) à l'aide de ladite résine à un taux d'imprégnation d'au moins 40 %,
- puis on met en place sur l'une des faces dudit pli unique (2, 24) un revêtement (6, 26) d'un agent d'étanchéité, en sorte d'obtenir une bande unique dont l'une des faces est constituée par ledit tissu imprégné et l'autre face est constituée par le film d'agent d'étanchéité.
- ladite polymérisation étant effectuée alors que ledit pli unique (2, 24) et son revêtement (6, 26) sont en forme dans ou sur ledit moule (20a, 20b), la structure de fibres imprégnée constituant après polymérisation, la structure de la tuyauterie.

2. Procédé selon la revendication 1, **caractérisé en ce que** ledit agent d'étanchéité est constitué par un film fin autoextenguible (6).

3. Procédé selon les revendications 1 et 2, **caractérisé en ce que** l'agent d'étanchéité constitué par ledit film (6) est pressé contre un tissu (4) de fibres préalablement imprégné d'une résine appropriée et constituant ledit pli unique (4), ladite bande étant ensuite drapée dans ou sur un moule de forme appropriée.

4. Procédé suivant la revendication 3, **caractérisé en ce que** ladite face de la bande constituée par le tissu imprégné (4) est placée contre la paroi du moule.

5. Procédé suivant la revendication 1, **caractérisé en ce que** ledit agent d'étanchéité est constitué par une pâte, notamment une pâte autoextinguible de type mélamine.

6. Procédé suivant les revendications 1 et 5, **caractérisé en ce que** l'agent d'étanchéité constitué par ladite pâte est appliqué sur l'une des faces d'un tissu de fibres préalablement imprégné (4) constituant ledit pli unique, puis l'ensemble est drapé dans ou sur un moule de forme appropriée.

7. Procédé suivant la revendication 6, **caractérisé en ce que** la face du pli (4) non revêtue dudit agent d'étanchéité est placée contre la paroi du moule.

8. Procédé suivant la revendication 1, **caractérisé en ce qu'**on met en place par drapage dans ou sur le moule (20a, 20b) ledit pli unique pré-imprégné (24), puis on met en place sur ledit pli drapé (24) le revêtement d'agent d'étanchéité (26), ensuite on presse l'ensemble pli-revêtement contre le moule (20a, 20b) et on effectue ladite polymérisation dans une étuve ou un autoclave (22).

9. Tuyauterie susceptible d'être obtenue par le procédé selon l'une quelconque des revendications 1 à 8.

10. Tuyauterie suivant la revendication 9, **caractérisée en ce que** le revêtement d'agent d'étanchéité (6, 26) constitue la paroi interne.

## Patentansprüche

1. Verfahren zum Herstellen von Verbund-Rohrsträngen, insbesondere für Klimaanlagen, anhand einer Struktur aus mineralischen oder organischen, natürlichen oder künstlichen Fasern, bei dem die Faserstruktur mit einem geeigneten Harz imprägniert wird und nach der Formung in oder auf einer Form die Temperatur und eventuell der Druck erhöht werden, um das Harz zu polymerisieren, wobei eine Abdichtung der Wand des geformten Teils während dieses Verfahrens ausgeführt wird, **dadurch gekennzeichnet, dass**:
- eine Faserstruktur hergestellt wird, die aus einer einzigen Lage (2, 24) mit einer flächenbezogenen Masse von wenigstens etwa 400 g/m² gebildet ist,
- die einzige Lage (2, 24) mit Hilfe des Harzes mit einem Imprägnierungsanteil von wenigstens 40 % imprägniert wird,
- dann auf einer der Flächen der einzigen Lage (2, 24) eine Beschichtung (6, 26) aus einem Dichtungsmittel angeordnet wird, derart, dass ein einziges Band erhalten wird, wovon eine Fläche durch das imprägnierte Gewebe und die andere Fläche durch die Dichtungsmittelschicht gebildet ist,
- wobei die Polymerisation ausgeführt wird, während die einzige Lage (2, 24) und ihre Beschichtung (6, 26) in oder auf der Form (20a, 20b) geformt werden, wobei die imprägnierte Faserstruktur nach der Polymerisation die Rohrstrangstruktur bildet.

2. Verfahren nach Anspruch 1, **dadurch gekennzeichnet, dass** das Dichtungsmittel durch eine dünne, selbstlöschende Schicht (6) gebildet ist.

3. Verfahren nach den Ansprüchen 1 und 2, **dadurch gekennzeichnet, dass** das Dichtungsmittel, das durch die Schicht (6) gebildet ist, gegen ein im Voraus mit einem geeigneten Harz imprägniertes Fasergewebe (4) gepresst wird und die einzige Lage (4) bildet, wobei das Band anschließend in oder auf einer geeignet geformten Form drapiert angeordnet wird.

4. Verfahren nach Anspruch 3, **dadurch gekennzeichnet, dass** die durch das imprägnierte Gewebe (4) gebildete Fläche des Bandes gegen die Wand der Form angeordnet wird.

5. Verfahren nach Anspruch 1, **dadurch gekennzeichnet, dass** das Dichtungsmittel durch eine Paste, insbesondere eine selbstlöschende Paste des Melamin-Typs gebildet ist.

6. Verfahren nach den Ansprüchen 1 und 5, **dadurch gekennzeichnet, dass** das Dichtungsmittel, das durch die Paste gebildet ist, auf eine der Seiten eines im Voraus imprägnierten Fasergewebes (4), das die einzige Lage bildet, aufgebracht wird und dass dann die Gesamtheit in oder auf einer geeignet geformten Form drapiert wird.

7. Verfahren nach Anspruch 6, **dadurch gekennzeichnet, dass** die Fläche der Lage (4), die nicht mit dem Dichtungsmittel beschichtet ist, gegen die Formwand angeordnet wird.

8. Verfahren nach Anspruch 1, **dadurch gekennzeichnet, dass** die vorimprägnierte einzige Lage (24) in oder auf der Form (20a, 20b) durch Drapieren angeordnet wird, dass dann auf der drapierten Lage (24) die Dichtungsmittel-Beschichtung (26) angeordnet wird, dass dann die Gesamtheit aus Lage und Beschichtung gegen die Form (20a, 20b) gepresst wird und dass die Polymerisation in einem Wärmeschrank oder in einem Aütoklaven (22) ausgeführt wird.

9. Rohrstrang, der durch das Verfahren nach einem der Ansprüche 1 bis 8 erhalten werden kann.

10. Rohrstrang nach Anspruch 9, **dadurch gekennzeichnet, dass** die Dichtungsmittel-Beschichtung (6, 26) die Innenwand bildet.

## Claims

1. A method of manufacturing composite pipework, in particular for air conditioning, from a structure of natural or artificial, mineral or organic fibres, in which said structure of fibres is impregnated in a resin and, after forming in or on a mould, the temperature and possibly the pressure is raised for the purpose of polymerisation of said resin, the wall of the formed part being made fluidtight during this process, **characterised in that**:
- a structure of fibres formed from a single layer (2, 24) is used with a weight per surface area of at least approximately 400 g/m²,
- said single layer (2, 24) is impregnated by means of said resin to a degree of impregnation of at least 40%,
- then a coating (6, 26) of a sealing agent is put in place on one of the faces of said single layer (2, 24), so as to obtain a single band, one of the faces of which is formed by said impregnated fabric and the other face of which is formed by the film of sealing agent,
- said polymerisation being effected while said single layer (2, 24) and its coating (6, 26) are formed in or on said mould (20a, 20b), the impregnated structure of fibres forming, after polymerisation, the structure of the pipework.

2. A method according to claim 1, **characterised in that** said sealing agent consists of a fine self-extinguishing film (6).

3. A method according to claims 1 and 2, **characterised in that** the sealing agent consisting of said film (6) is pressed against a fabric (4) of fibres previously impregnated with a suitable resin and constituting said single layer (4), said band then being draped in or on a mould of suitable shape.

4. A method according to claim 3, **characterised in that** said face of the band formed by the impregnated fabric (4) is placed against the wall of the mould.

5. A method according to claim 1, **characterised in that** said sealing agent consists of a paste, in particular a self-extinguishing paste of the melamine type.

6. A method according to claims 1 and 5, **characterised in that** the sealing agent consisting of said paste is applied to one of the faces of a previously impregnated fabric of fibres (4) constituting said single layer, and then the whole is draped in or on a mould of suitable shape.

7. A method according to claim 6, **characterised in that** the face of the layer (4) that is not coated with the sealing agent is placed against the wall of the mould.

8. A method according to claim 1, **characterised in that** said preimpregnated single layer (24) is placed by draping in or on the mould (20a, 20b), then the coating of sealing agent (26) is placed on said draped layer (24), next the layer/coating assembly is pressed against the mould (20a, 20b) and said polymerisation is carried out in an oven or autoclave (22).

9. Pipework able to be obtained by the method according to any one of claims 1 to 8.

10. Pipework according to claim 8, **characterised in that** the coating of sealing agent (6, 26) constitutes the internal wall.
